# EUROPÄISCHE PATENTSCHRIFT

(11) **EP 3 680 191 B1**
(45) Veröffentlichungstag und Bekanntmachung des Hinweises auf die Patenterteilung: **03.05.2023**
(21) Anmeldenummer: 20155960.6
(22) Anmeldetag: 05.04.2017
(51) Int. Cl.: B65D 17/28

(54) **VERFAHREN ZUR HERSTELLUNG EINER ÖFFNUNG IN EINEM FLÄCHIGEN BLECHMATERIAL**
METHOD FOR OBTAINING AN OPENING IN A FLAT SHEET MATERIAL
PROCÉDÉ D'OBTENTION D'UNE OUVERTURE DANS UNE TÔLE PLANE

(43) Veröffentlichungstag der Anmeldung: 15.07.2020
(62) Teilanmeldung aus: 17165040.1
(73) Patentinhaber: Piech, Gregor Anton, 6351 Scheffau am Wilden Kaiser (AT)
(72) Erfinder: Piech, Gregor Anton, 6351 Scheffau am Wilden Kaiser (AT)
(74) Vertreter: Manitz Finsterwald Patent- und Rechtsanwaltspartnerschaft mbB

(56) Entgegenhaltungen:
- EP-B1- 2 354 022
- DE-A1-102015 112 428

## Beschreibung

Die Erfindung betrifft ein Verfahren zur Herstellung einer dichten, aufreißbaren oder eindrückbaren und vorzugsweise wiederverschließbaren Öffnung in einem flächigen Blechmaterial, insbesondere in einem Dosendeckel, der wiederverschließbar ausgebildet ist oder einem Standard-Dosendeckel entspricht, bei dem der Öffnungsbereich entweder aufreißbar ist oder in das Doseninnere gedrückt werden kann.

Aus der EP 1 607 341 A1 ist ein Dosendeckel mit einer wiederverschließbaren Öffnung bekannt, bei dem in dem metallischen Dosendeckel eine Öffnung eingebracht und der Rand dieser Öffnung umgebördelt ist, um eine Verankerungsmöglichkeit für ein vorgefertigtes Kunststoff-Verschlussteil zu schaffen. Das Kunststoff-Verschlussteil umfasst ein mit dem Bördelrand der Dosenöffnung zu verbindendes Basisteil, in dem eine durch einen Flachstopfen verschlossene Öffnung ausgebildet ist. Der Flachstopfen ist mit dem Öffnungsrand über eine Kunststoff-Reißnaht verbunden, so dass der mit einer Aufreißlasche verbundene Flachstopfen durch Zugausübung über die Aufreißlasche von dem Kunststoff-Basisteil gelöst und in eine Öffnungsstelle verschwenkt werden kann. Die Öffnung kann durch Eindrücken des an seiner Unterseite vorzugsweise konisch ausgebildeten Flachstopfens wieder vorübergehend verschlossen werden.

Wiederverschließbare Dosendeckel sind ferner beispielsweise in der DE 10 2010 013 531 A1 und der EP 2 354 022 B1 beschrieben.

Schließlich ist aus der DE 10 2015 112 428 A1 des Anmelders eine wiederverschließbare Öffnung und ein Verfahren zur Herstellung derselben gemäß dem Oberbegriff des Anspruchs 1 bekannt.

Aufgabe der Erfindung ist es, eine Fertigung des bekannten wiederverschließbaren Dosendeckels in noch wirtschaftlicherer Weise mit vereinfachtem konstruktiven Aufbau zu ermöglichen, Materialersparnisse zu erreichen und dabei gleichzeitig die Funktion zu verbessern.

Gelöst wird die Aufgabe durch ein Verfahren mit den Merkmalen des Anspruchs 1.

Die vorliegende Offenbarung betrifft auch einen metallischen Dosendeckel der nicht Teil der Erfindung ist, mit einer wiederverschließbaren Öffnung, insbesondere für Getränkedosen sowie für Behältnisse zur Aufbewahrung von Lebensmitteln und sonstigen flüssigen, pastösen, pulverförmigen und/oder festen Produkten.

Ein solcher metallischer Dosendeckel kann mit einem in der metallischen Deckelfläche vorgesehenen, durch einen umlaufenden und deckelinnenseitig durch eine Folie abgedichteten Mikrospalt mit diesem benachbart verlaufender Schwächungslinie in der Folie versehen sein, ferner mit einem mit der festen Deckelfläche verbundenen und den Öffnungsbereich umschließenden Dichtungsrahmen aus Kunststoffmaterial, einer mit dem innerhalb des Mikrospalts gelegenen, aufschwenkbaren metallischen Deckelbereich verbundenen Verschließeinheit aus Kunststoffmaterial, die schwenkbar an der festen Deckelfläche angebracht und dem Schwenklagerbereich diametral gegenüberliegend mit einem Aufreißorgan versehen ist, wobei der Dichtungsrahmen und die Verschließeinheit über Dicht- und Rastrippen und zugehörige Aufnahmenuten zusammenwirken und der innerhalb des ringförmigen Mikrospalts gelegene metallische Deckelbereich, insbesondere form- und kraftschlüssig und insbesondere verzahnungsfrei, im Öffnungsbereich des Deckels aufgenommen und gehalten ist, und wobei die an der Deckelinnenseite vorgesehene, den Mikrospalt abdeckende Folie aus einem Formteil, insbesondere einem Tiefzieh-Formteil besteht, das die Unterseitenstruktur des eine durchgehende metallische Fläche bildenden Dosendeckels nachbildet, und sowohl der Dichtungsrahmen mit der festen Deckelfläche als auch die Verschließeinheit mit dem aufschwenkbaren metallischen Deckelbereich stoffschlüssig, insbesondere durch ein thermisches Verfahren unter Verwendung einer bevorzugt lebensmitteltauglichen und/oder Schmiereigenschaften aufweisenden Haftlackschicht, verbunden sind.

Es ist möglich, sowohl den Dichtungsrahmen als auch die Verschließeinheit platzsparend und vorzugsweise in einer Vertiefung der Dosendeckelfläche auf der Oberseite des Dosendeckels unterzubringen und zu befestigen und damit Durchbrechungen der Dosendeckelfläche zu vermeiden. Dies erbringt auch Vorteile hinsichtlich der Hygiene, insbesondere dann, wenn die Verschließeinheit auf ihrem gesamten Außenumfang eine sich bis zur festen Deckelfläche erstreckende Abdichtschürze aufweist, die vorzugsweise mit der festen Deckelfläche über die Haftlackschicht stoffschlüssig verbunden ist.

Auf diese Weise kann sichergestellt werden, dass die deckelaußenseitig gelegenen Kunststoffelemente nicht durch Verunreinigungen und dergleichen unterwandert werden können.

Die doseninnenseitig gelegene Unterseite des metallischen Dosendeckels, die von einer praktisch durchgehenden, lediglich den Mikrospalt beinhaltenden Metallfläche gebildet wird, kann wiederum über die Haftlackschicht mit dem die Abdichtung des Mikrospalts gewährleistenden Kunststofffolien-Formteil stoffschlüssig verbunden sein, wobei von Bedeutung ist, dass keine zur Verschließeinheit oder zum Dichtungsrahmen gehörenden Kunststoffteile sich durch das metallische Deckelmaterial erstrecken und demgemäß deckelunterseitig lediglich zwei Komponenten, nämlich der metallische Deckel einerseits und das Kunststoff-Formteil andererseits, miteinander in Berührung kommen und verbunden werden müssen.

Von Vorteil ist des Weiteren die bevorzugte Verwendung einer verzahnungs- bzw. hinterschneidungsfreien Zusammenfügung des aus der Deckelfläche zunächst ausgestanzten und dann wieder in die Deckelfläche zurückgedrückten, aufschwenkbaren Deckelbereichs, wobei die Erkenntnis genutzt wird, dass der Ausstanzvorgang so gestaltet werden kann, dass sich im Deckelmaterial über einen Teilbereich der Materialdicke eine konische Erweiterung erzielen lässt, die unter Ausbildung des erwünschten Mikrospalts eine form- und/oder kraftschlüssige Verbindung zwischen fester Deckelfläche und ausgestanztem Deckelbereich ermöglicht.

Die stoffschlüssige Verbindung kann insbesondere in einer Kunststoffschweißverbindung bestehen, wobei der Haftlack zur Haftvermittlung zwischen Kunststoff und Metall dient, oder in einer sogenannten Hotmelt-Verbindung.

Vorzugsweise sind der Dichtungsrahmen, die Verschließeinheit und das Folienformteil bezüglich der metallischen Deckelfläche mittels vorzugsweise punktförmiger Positioniernoppen und zugehöriger, insbesondere napfförmiger Vertiefungen gegenseitig exakt ausgerichtet.

Während die Noppen für die an der Außenseite des Dosendeckels positionierten Kunststoffteile bevorzugt an diesem Kunststoffteil ausgebildet sind, wirken die napfförmigen Vertiefungen zur Aufnahme der Noppen des Dichtungsrahmens an der Unter- oder Innenseite des Deckels gleichzeitig als Noppen zur Positionierung des Kunststoff-Formteils, das entsprechend komplementäre Vertiefungen aufweist.

Der fertige Dosendeckel besteht bevorzugt aus einem Verbundwerkstoff in Form einer beidseitig mit einem Haftlack beschichteten und innenseitig über die Haftlackschicht mit dem Folienformteil verbundenen Blechlage, insbesondere aus Aluminium oder Weißblech, wobei die mechanische Festigkeit der Folienkomponente im Verbundwerkstoff zweckmäßigerweise derart gewählt ist, dass unter Gewährleistung der geforderten Gesamtfestigkeit des Verbundwerkstoffs die Materialstärke der metallischen Komponente im Vergleich zu einer folienfreien Komponente reduzierbar, insbesondere um zumindest 1% reduzierbar ist.

In Anbetracht der riesigen Stückzahl von in der Praxis gefertigten Dosendeckeln spielt eine derartige Materialeinsparung, auch wenn sie beispielsweise nur 1% beträgt, unter wirtschaftlichen Aspekten bereits eine vergleichsweise große Rolle und stellt demgemäß einen entsprechenden Vorteil dar.

Nach einer Variante erstreckt sich das Folien-Formteil des Verbundwerkstoffs bis in den zur Verbindung des Deckels mit einer Dose vorgesehenen Bördelrand und wirkt dort als Dichtmaterial und Korrosionsschutz.

Durch diese Maßnahme kann wiederum eine praktisch relevante Einsparung und Kostenreduzierung erreicht werden.

Der an die Verschließeinheit angeformte Schwenklagerbereich kann zwischen seinem Befestigungsbereich und dem Schwenkteil einen deckelseitig geschlossenen, sich beidseitig zwickelartig erweiternden und als Kippfeder wirkenden Bügelbereich besitzen, der eine bistabile Positionierung der Verschließeinheit ermöglicht. Diese Anordnung stellt sicher, dass die Verschließeinheit bei Überschreiten eines Öffnungswinkels von ca. 90° auf einen Öffnungswinkel von mehr als 130° bewegt und in dieser Position offengehalten wird, während bei einem Unterschreiten eines Winkels von ca. 90° aus der Offenstellung die Verschließeinheit auf eine Öffnungswinkelstellung von kleiner 30° zurückschnappt. Aus dieser Position kann die Verschließeinheit wieder problemfrei in die abdichtende Schließlage gedrückt werden. Dieser Vorgang kann mehrfach reversibel in beiden Richtungen durchgeführt werden.

Wichtig ist dabei auch die außenseitig geschlossene Ausbildung dieses als Kippfeder wirkenden Bereichs, da dadurch Spalte, die zur Verschmutzung neigen, vermieden werden.

Dichtungsrahmen und Verschließeinheit können über eine innenliegende Dichtrippe und eine außenliegende Rastrippe, welche in entsprechende Aufnahmenuten eingreifen, zusammenwirken. Zwischen der Dichtrippe und einer Wandung der zugehörigen Aufnahmenut kann dabei eine vorgebbare Schrägflächen-Dichtpaarung vorgesehen sein, wobei die Wahl der Schräge davon abhängig ist, welchem Doseninnendruck nach erfolgtem Wiederverschließen der Dose standgehalten werden muss, wobei gleichzeitig zu berücksichtigen ist, dass der Öffnungsvorgang dadurch nicht störend erschwert wird.

Die Rastrippe kann mit einem kurzen Schrägflächenansatz versehen sein, der mit einer Gegenrast der zugehörigen Aufnahmenut zusammenwirkt, wobei zwischen den beiden zusammenwirkenden Flächen bei verschlossener Dosenöffnung ein vorgebbares Spiel vorgesehen ist.

Dieses geringe Spiel kann dazu genutzt werden, während der Öffnungsbewegung der Verschließeinheit einen Überdruckabbau zu ermöglichen, ohne dass in dieser Phase der Deckel schon so weit geöffnet ist, dass die Gefahr eines Herausspritzens von Flüssigkeit bestehen würde.

Eine Variante sieht vor, dass der Dosendeckel zumindest im Wesentlichen aus der gleichen Aluminiumlegierung wie das mit ihm verbundene Behälterteil besteht und die metallische Materialstärke des Dosendeckels im Wesentlichen gleich der Materialstärke des Behälterteils ist und vorzugsweise zumindest den zweifachen Wert der Materialstärke des Behälterteils nicht überschreitet, wobei die Materialstärke des Behälterteils im Bereich von etwa 0,1 mm und weniger gelegen ist.

Bekannte Dosen, insbesondere Getränkedosen, bestehen aus Aluminiumlegierungen, wobei es üblich ist, für den zylindrischen Dosenteil eine Aluminiumlegierung der Serie 3000 und für den Deckelteil eine Aluminiumlegierung der Serie 5000 zu verwenden, um den unterschiedlichen technischen Anforderungen hinsichtlich Dosenteil und Deckelteil Rechnung zu tragen. Bisher ist es nur gelungen die Wandungsstärke der Dosenwand bis auf etwa 0,09 mm zu reduzieren, und zwar durch Verwendung von Aluminiumlegierung der Serie 3000, die preiswerter ist als die Aluminiumlegierung der Serie 5000, welche üblicherweise als Deckelmaterial eingesetzt wird. Die Wandungsstärke des Deckelmaterials muss zumindest doppelt so groß sein wie die Materialstärke der Dosenwand, um trotz der bei bekannten Deckeln im Deckelmaterial auszubildenden Einkerbung zur Schaffung einer Aufreißnut die notwendige Druckfestigkeit der Dose zu gewährleisten. Diese Einkerbung besitzt eine Tiefe, die typischerweise etwa der Hälfte der Materialstärke des Dosendeckels entspricht. Durch den Einsatz der höherwertigen Legierungsserie Aluminium 5000 können aber alle Anforderungen an den Dosendeckel hinsichtlich der Öffnungskriterien und der Dichtheit erfüllt werden.

Neben der durch Materialwahl bzw. Ausgestaltung des Verbundmaterials und Gewichtsverringerung erzielten Einsparung an Fertigungskosten ist es von wesentlicher Bedeutung, dass es auch aufgrund der speziellen Mikrospaltgestaltung nicht mehr erforderlich ist, für das Deckelmaterial ein spezielles Material, wie z.B. eine Aluminiumlegierung der Serie 5000, insbesondere 5182, zu verwenden, da nunmehr auch für das metallische Deckelmaterial ein preisgünstiges Aluminium der Serie 3000 eingesetzt werden kann.

In der Zeichnung zeigt:
- Fig. 1: eine Draufsicht auf einen Dosendeckel für eine Getränkedose,
- Fig. 2: eine Seitenansicht des Dosendeckels nach Fig. 1,
- Fig. 3: eine Schnittansicht entsprechend der Linie A-A in Fig. 1,
- Fig. 4: eine vergrößerte Darstellung des Details B in Fig. 3,
- Fig. 5: eine vergrößerte Darstellung des Details C aus Fig. 3,
- Fig. 6: eine weiter vergrößerte Darstellung des Details D aus Fig. 5 zur Erläuterung des Kupplungsmechanismus zwischen Dichtungsrahmen und Verschließeinheit, und
- Fig. 7: eine schematische Darstellung zur Erläuterung der Umfangsrandgestaltung des den Öffnungsbereich des Dosendeckels definierenden Stanzteils zur Verwendung in einem erfindungsgemäßen Verfahren zur Herstellung einer dichten, aufreißbaren oder eindrückbaren Öffnung in einem flächigen Blechmaterial.

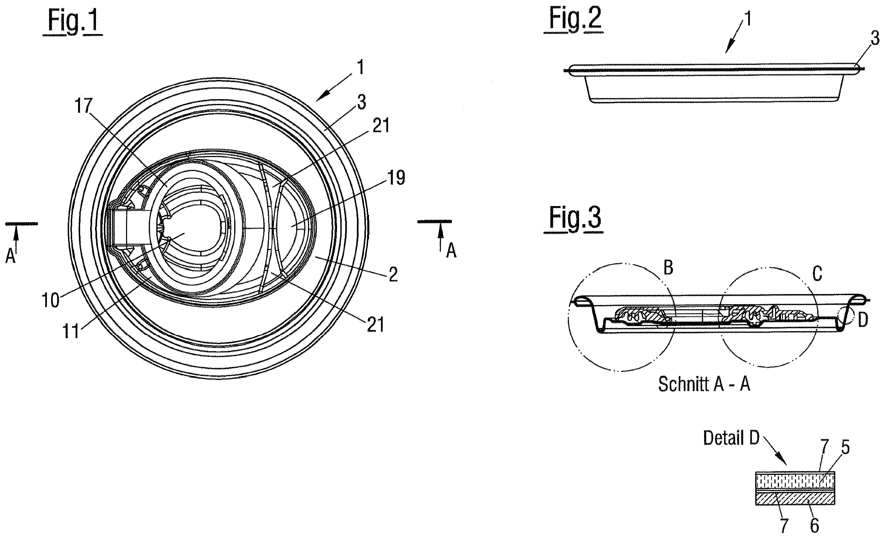

Die Draufsicht nach Fig. 1 zeigt einen insbesondere für eine Getränkedose bestimmten Dosendeckel 1, in dessen Deckelfläche ein wiederverschließbares Öffnungssystem integriert ist.

Dazu ist im Dosendeckel ein Deckelbereich 10 vorgesehen, der über im Einzelnen noch darzustellende und zu beschreibende Mittel über ein Aufreißorgan 17 geöffnet und hochgeschwenkt werden kann, und zwar über einen Schwenklagerbereich, dessen fester Teil 19 am Dosendeckel befestigt ist. Zwischen diesem festen Teil 19 und einer mit dem metallischen Deckelbereich 10 fest verbundenen Verschließeinheit 11 ist dabei ein Kippfederabschnitt 21 vorgesehen, der es gestattet, die Verschließeinheit 11 bei Überschreiten eines Öffnungswinkels von ca. 90° auf mehr als 130° zu öffnen, d.h. die Verschließeinheit in ihre End-Öffnungsstellung schnappen zu lassen. Unterschreitet die Verschließeinheit im Zuge des Schlie-ßens einen Öffnungswinkel von ca. 90°, so schnappt die Verschließeinheit auf einen Öffnungswinkel kleiner 30° zurück, und aus dieser Teil-Öffnungsstellung kann die Verschließeinheit wieder manuell problemlos in die abdichtende Schließlage gedrückt werden. Dieser Vorgang kann mehrfach reversibel in beiden Richtungen durchgeführt werden.

Der Dosendeckel 1 wird mit dem zugehörigen Behältnis bevorzugt über einen Bördelrand 3 verbunden.

Die Seitenansicht des Dosendeckels 1 nach Fig. 1 verdeutlicht, dass das Verschluss- und Öffnungssystem von derart flacher Bauweise ist, dass es vollständig innerhalb der Tiefe des Deckelteils aufgenommen wird und in der Schließstellung keinerlei Teile über die Deckelkontur überstehen.

Fig. 3 zeigt einen Schnitt durch den Deckel nach Fig. 1 entsprechend der Schnittlinie A-A, wobei die für Aufbau und Funktion besonders wichtigen Detailbereiche mit B und C gekennzeichnet sind, die nachfolgend im Einzelnen erläutert werden.

Das dargestellte Detail D zeigt in stark vergrößerter Weise den strukturellen Aufbau einer Hauptkomponente des Dosendeckels in Form eines Verbundwerkstoffs.

Diese Hauptkomponente des Dosendeckels besteht aus einer geeignet geformten Blechlage 5 aus Aluminium oder Weißblech, und diese Blechlage ist beidseits jeweils mit einer Haftlackschicht 7 versehen, die als Haftvermittler dient und es ermöglicht, eine hochfeste und dauerhafte stoffschlüssige Verbindung zwischen Metall, insbesondere Aluminium und dem vorzugsweise aus Polypropylen bestehenden Kunststoff der Folie 6 zu gewährleisten, der an der Deckelunterseite, d.h. doseninnenseitig vorgesehen und lebensmittelgeeignet ist. Die gegenseitige Verbindung der einzelnen Komponenten des Verbundwerkstoffs erfolgt vorzugsweise in einem sogenannten Heiß-Siegel-Verfahren, bei welchem der Kunststoff angeschmolzen wird, so dass sich eine stoffschlüssige Verbindung mit dem Metall ergibt.

Obwohl die Materialstärke des metallischen Dosendeckelteils aufgrund der Verwendung der eingangs bereits geschilderten Mikrospalttechnologie im Gegensatz zu Dosendeckeln mit aufreißbarer Ritzlinie bereits verringert werden kann, ist es von Vorteil, den geschilderten Verbundwerkstoff zu verwenden, da es der Verbundwerkstoff gestattet, ohne Einbußen hinsichtlich der geforderten Festigkeitswerte die Materialstärke der Blechlage weiter zu verringern und dadurch in der Praxis bedeutsame Material- bzw. Kosteneinsparungen zu erreichen.

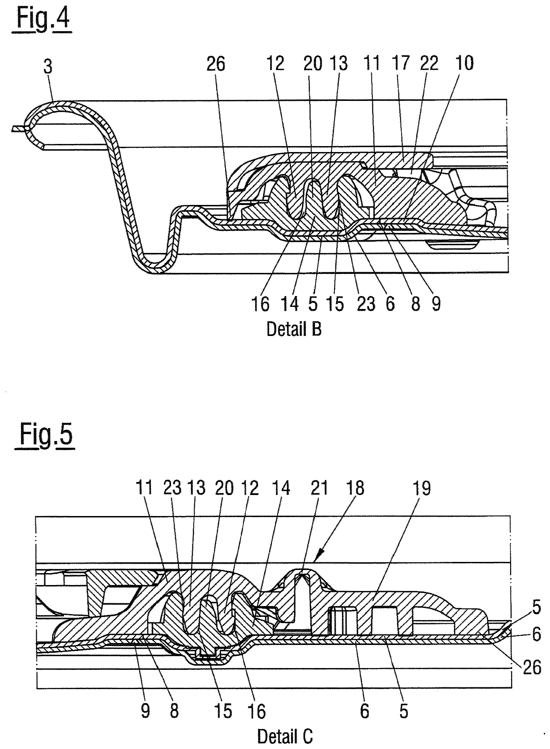

Fig. 4 zeigt vergrößert den Bereich B nach Fig. 3, d.h. den Bereich, an dem das Aufreißorgan 17 am aufschwenkbaren Deckelteil befestigt ist, und zwar an dessen äußerem Rand, so dass sich beim Hochziehen des Deckelteils auch aufgrund der Elastizität des Deckelmaterials insbesondere ein Hebeleffekt ergibt, der das Öffnen des Deckelteils begünstigt.

Die mit der Blechlage 5 über die Haftlackschicht 7 stoffschlüssig verbundene Kunststofffolie 6 entspricht in ihrer Formteilkontur der Kontur der Unterseite des Blechdeckelteils 5 und erstreckt sich bevorzugt in den Bördelbereich 3, wo sie gleichzeitig als Dichtung und Korrosionsschutz wirken kann.

Im Dosendeckelmaterial 5 ist der in Fig. 1 angedeutete aufschwenkbare Deckelbereich 10 vorgesehen, der nicht von einer Materialschwächung, sondern vielmehr von einem Mikrospalt 8 begrenzt wird. Dieser umlaufende Mikrospalt 8 wird dadurch gebildet, dass aus dem Blechmaterial der Deckelbereich 10 ausgestanzt und anschließend wieder in die Öffnung zurückgedrückt und durch Klemmung gehalten wird, so dass wiederum eine ebene Metallfläche vorliegt und der metallische, beidseitig mit einer Haftlackschicht versehene Deckel wieder als einheitliches Teil gehandhabt werden kann.

Unabhängig von der konkret verwendeten Methode zur Herauslösung des aufschwenkbaren Deckelbereichs aus dem Deckelmaterial liegt im Bereich des Mikrospalts lediglich eine durch Klemmhalterung gebildete Verbindung vor, so dass beim erstmaligen Öffnen einer mit dem erfindungsgemäßen Deckel versehenen Dose keinerlei Metalltrennung mehr erfolgen muss und somit die sonst unvermeidliche Bildung von metallischen Mikropartikeln ausgeschlossen wird. Diese Vermeidung des Entstehens von Mikropartikeln beim Öffnungsvorgang, insbesondere Mikropartikeln aus Aluminium, ist unter Gesundheitsaspekten von Bedeutung, denn solche Mikropartikel gelangen unvermeidbar auch in das in der jeweiligen Dose enthaltene Produkt und damit auch in den menschlichen Körper.

Der Mikrospalt 8, der bevorzugt von einer geraden, bzw. gekrümmten und unverzahnten Linie gebildet wird, ist unterseitig, d.h. deckelinnenseitig von der Kunststofffolie bedeckt und damit abgedichtet. Die Kunststofffolie, die vorzugsweise aus lebensmittelgeeignetem Polypropylen besteht, besitzt dem Mikrospalt benachbart eine Einkerbung 9, die umlaufend gleiche oder gegebenenfalls auch unterschiedliche Tiefe besitzen kann und sicherstellt, dass zum Öffnen des Deckels nur eine vergleichsweise geringe Kraft benötigt wird. Der Abstand zwischen dem Mikrospalt 8 und der Einkerbung 9 beträgt vorzugsweise etwa das Doppelte der Folienstärke, also beispielsweise 3 bis 4 Zehntel Millimeter.

Die erforderliche Öffnungskraft ist nicht nur davon abhängig, welche Kraft zur Trennung der Verbindung zwischen Blechlage 5 und Kunststofffolie 6 im Bereich des Mikrospalts 8 benötigt wird, sondern auch noch von der Dichtungspaarung, die im Zusammenwirken von Dichtungsrahmen 14 und Verschließeinheit 11 realisiert ist.

Der Dichtungsrahmen 14 aus Kunststoffmaterial, insbesondere Polypropylen, umschließt den Öffnungsbereich und ist, vorzugsweise in einer Vertiefung der Blechlage 5, über die bereits erwähnte Haftlackschicht 7 fest mit dem metallischen Deckelmaterial verbunden. Dabei ist es möglich, diese feste Verbindung nur im Bodenbereich der Vertiefung vorzusehen.

Der Dichtungsrahmen 14 besitzt zwei durch einen Mittelsteg 20 voneinander getrennte Aufnahmenuten 15, 16 für eine Rastrippe 12 und eine Dichtrippe 13, die an der Verschließeinheit 11 vorgesehen sind. Diese ebenfalls aus Kunststoffmaterial, vorzugsweise Polypropylen, bestehende Verschließeinheit 11 ist analog zum Dichtungsrahmen 14 fest mit dem metallischen Deckel verbunden, jedoch nicht mit der ortsfesten Deckelfläche 2, sondern vielmehr mit dem aufschwenkbaren Deckelbereich 10. Das aufschwenkbare Deckelteil wird somit von dem durch den Mikrospalt 8 begrenzten metallischen Deckelbereich 10 und die daran randseitig befestigte Verschließeinheit 11 gebildet, an die auch das Aufreißorgan 17 angeformt ist.

Dieses mit dem Außenrand der Verschließeinheit 11 verbundene Aufreißorgan 17 ist mit einem Halte- oder Fixierelement 22 versehen, das sich zum Deckelteil hin erstreckt und dort leicht lösbar fixiert ist, so dass sich anhand dieser Verbindung die Unversehrtheit der jeweiligen Verpackung einfach überprüfbar ist.

Dem Aufreißorgan 17 diametral gegenüberliegend ist an der Verschließeinheit 11 ein an diesen Rahmen angeformter Schwenklagerbereich 18 ausgebildet, der fest mit der außerhalb des aufschwenkbaren Deckelteils gelegenen Deckelfläche verbunden ist, was noch anhand der Fig. 5 erläutert wird.

Fig. 5 zeigt in vergrößerter Darstellung den Detailbereich C nach Fig. 3, d.h. den dem Aufreißorgan 17 diametral gegenüberliegenden Schwenklagerbereich 18 in Verbindung mit Dichtungsrahmen und Verschließeinheit 11, die im geschlossenen Zustand des Dosendeckels in der gezeigten Weise miteinander in Eingriff sind und eine dichte Schnapp-Rastverbindung bilden.

Funktionsmäßig sind die in der Aufnahmenut 16 aufgenommene Rippe 13 und die in der Aufnahmenut 15 aufgenommene Rippe 12 unterschiedlich, d.h. es liegen zumindest zum Teil getrennte Funktionen vor, wodurch eine Optimierung des Zusammenwirkens von Dichtungsrahmen 14 und Verschließeinheit 11 ermöglicht wird. Die Verschließeinheit 11 ist mit dem festen Teil des Schwenklagers über einen mit einem integrierten, bistabilen Kippfederabschnitt 21 verbunden. Dieser hält das Deckelteil, bestehend aus dem metallischen Deckelbereich 10, der daran befestigten Verschließeinheit 11 und dem Aufreißorgan 17 bei Überschreiten von ca. 90° auf mehr als 130° offen, so dass der Innenraum des jeweiligen Behältnisses optimal zugänglich ist. Bei Unterschreiten von ca. 90° schnappt das Deckelteil auf einen Öffnungswinkel kleiner 30° zurück. Aus dieser Offenstellung kann das Deckelteil wieder in die abdichtende Schließlage überführt bzw. gedrückt werden. Dieser Vorgang kann mehrfach reversibel in beiden Richtungen durchgeführt werden.

Von oben betrachtet stellt der Schwenklagerbereich 18 einen praktisch geschlossenen Bereich dar, d.h. es werden die vor allem im Kippfederbereich bei bekannten Lösungen häufig vorhandenen Spalte und Öffnungen vermieden. Von besonderer Bedeutung unter hygienischen Aspekten ist aber das Merkmal, dass die Verschließeinheit 11 auf ihrem gesamten Außenumfang mit einer sich bis zur festen Deckelfläche 2 erstreckende Abdichtschürze 24 versehen ist, die vorzugsweise mit der Deckelfläche 2 über die Haftlackschicht stoffschlüssig verbunden ist. Auf diese Weise wird sicher verhindert, dass irgendwelche Verunreinigungen, Feuchtigkeit und dergleichen unter die Kunststoffelemente gelangen kann, d.h. es wird in hygienischer Hinsicht ein Optimum erreicht. Diese Verbindung wird beim erstmaligen Öffnen getrennt.

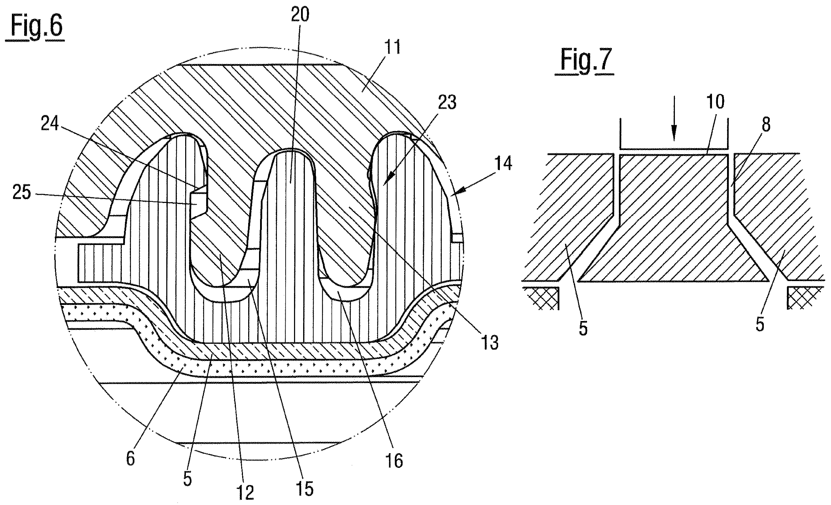

Wie dies in der weiter vergrößerten Detaildarstellung nach Fig. 6 zu erkennen ist, bildet die Dichtrippe 13 mit der Aufnahmenut 16 eine Dichtflächenpaarung 23. Diese Dichtflächenpaarung 23 trägt beim Schließvorgang zum Einschnappvorgang bei und hält die Verschließeinheit im geschlossenen Zustand in einer definierten Position.

Durch Vorgabe der Neigung der miteinander zusammenwirkenden Dichtflächen der Dichtflächenpaarung 23 kann aber auch der Öffnungswiderstand eingestellt werden, d.h. es kann eine Schrägflächenpaarung gewählt werden, die sicherstellt, dass einerseits dem jeweils auftretenden Innendruck standgehalten und zum anderen der Öffnungsvorgang nicht zu sehr erschwert wird.

Die Rastrippe 12 und die zugehörige Aufnahmenut 15 besitzen ebenfalls kurze, miteinander zusammenwirkende Schrägflächen, die einerseits die Rastverschnappung sichern, andererseits aber auch eine geringe freie Relativbewegung in Form eines Spiels 25 zwischen der Gegenrast 24 und der an der Rastrippe 12 vorgesehenen kurzen Schrägfläche ermöglichen. Diese freie Beweglichkeit kann dazu ausgenutzt werden, beim wiederholten Öffnen des Dosendeckels eine kleine Anfangsöffnungsbewegung zuzulassen, bei der ein eventuell vorhandener Innendruck abgebaut wird, ohne dass der Deckel bereits so weit geöffnet ist, dass in gegebenenfalls störender Weise Flüssigkeit austreten könnte.

Die schematische Darstellung nach Fig. 7 verdeutlicht einen bevorzugt verwendeten Vorgang des Ausstanzens des Deckelbereichs 10 aus der Blechlage 5 und das anschließend oder später wieder erfolgende Einfügen des ausgestanzten Bereichs in die gebildete Öffnung. Der speziell gewählte Ausstanzvorgang, d.h. die spezielle Wahl von Stempel und Matrize führt dazu, dass die Umfangskontur des ausgestanzten Bereichs über seine Dicke betrachtet, einen Glattschnittabschnitt und einen Schrägschnittabschnitt aufweist, die es ermöglichen bzw. erleichtern, den ausgestanzten Blechlagenbereich unter Ausbildung eines Mikrospalts sofort oder zu einem späteren Zeitpunkt wieder in die ausgestanzte Öffnung zu drücken, und zwar derart, dass der ausgestanzte Bereich mit zur Weiterverarbeitung ausreichender Klemmung in der Öffnung gehalten wird.

Ein besonderer Vorteil ergibt sich bei dem geschilderten Stanzvorgang dadurch, dass die Beschichtung der Blechlage mit einer Haftlackschicht mit Schmiermitteleigenschaften erfolgt, da hierdurch jegliche zusätzliche sonst bei einem Stanzvorgang benötigten Schmiermittel entbehrlich sind, da die Haftlackschicht allein beim Stanzvorgang das benötigte Schmiermittel liefert. Dies bedeutet, dass ein lebensmitteltaugliches Schmiermittel vorliegt, da die erfindungsgemäß verwendeten Haftlackschichten lebensmitteltauglich sind und demgemäß keine aufwändigen Reinigungsschritte benötigt werden, wie dies im Falle eines sonst zusätzlich benötigten Schmiermittels üblicherweise der Fall wäre.

Bevorzugt werden Stempel und Matrize so gewählt, dass der sich ergebende Glattschnittabschnitt sich über weniger als 50% der Materialdicke erstreckt und der restliche Schrägschnittabschnitt sich im Wesentlichen konisch erweitert. Dadurch wird ein ausreichender Kraftschluss erzielt, wenn das ausgestanzte Teil wieder in die Blechlage eingefügt bzw. eingedrückt wird, und es ist nicht mehr erforderlich, spezielle Verzahnungen oder Hinterschneidungen zwischen ausgestanztem Teil und Blechlage vorzusehen, um die notwendigen Haltekräfte zu erzielen.

In der praktischen Handhabung ist der offenbarte wiederverschließbare Dosendeckel auch deshalb vorteilhaft, weil das bevorzugt als Ringlasche ausgebildete Aufreißorgan 17 gut zugänglich ist, leicht ergriffen werden kann und über eine bequem ausführbare Zugbewegung ein Öffnen der jeweiligen Dose ermöglicht. Beim Wiederverschließen besteht der Vorteil, dass das vollständige Wiederverschließen durch die Schnapp-Rastverbindung bevorzugt fühlbar und außerdem akustisch wahrnehmbar ist.

Verwendbar ist der offenbarte Dosendeckel für alle Arten von Behältnissen, die wiederverschließbar sein sollen, wobei die dichte Verbindung des Dosendeckels mit dem jeweiligen Behältnis nicht nur über einen Bördelrand, sondern vor allem bei nichtmetallischen Behältnissen auch über Klebeverbindungen, Schweißverbindungen und dergleichen erfolgen kann.

Die Erfindung ist gerichtet auf ein Verfahren zur Herstellung einer dichten, aufreißbaren oder eindrückbaren und vorzugsweise wiederverschließbaren Öffnung in einem flächigen Blechmaterial, insbesondere in einem Dosendeckel, wie dies in den Ansprüchen im Einzelnen geschildert ist.

Dieses Fertigungsverfahren, das mit einer vorzugsweise beidseitig mit einer lebensmitteltauglichen Haftlackschicht beschichteten Blechlage arbeitet, ist sowohl zur Herstellung von Dosendeckeln der im Rahmen dieser Offenbarung beschriebenen Art sowie auch zur Herstellung von Standard-Dosendeckeln geeignet. Bei derartigen Standard-Dosendeckeln ist zum Öffnen des jeweiligen Öffnungsbereichs ein zweiarmiges Hebelorgan vorgesehen, das mit dem Deckelmaterial fest verbunden ist. Der Öffnungsbereich ist dabei als Zungenlasche ausgebildet, die von der Deckelfläche durch einen sich über den Laschenumfang erstreckenden Mikrospalt getrennt ist, wobei die mit der Deckelfläche verbundene Zungenlaschenbasis ein beim Öffnungsvorgang wirksam werdendes Knicklager bildet. Dabei ist die Unterseite des metallischen Deckels mit einer Kunststofffolie kaschiert oder laminiert. Diese Folie ist dem Mikrospalt benachbart geschwächt ausgeführt, um ein problemfreies Öffnen der jeweiligen Dose zu gewährleisten. Wenn die Anordnung so getroffen ist, dass die Zungenlasche beim Öffnungsvorgang zusammen mit dem sie unterseitig bedeckenden, durch die Schwächungslinie begrenzenden Teilbereich der Kunststoffbeschichtung in das Doseninnere verschwenkt wird, ist die Schwächungslinie außerhalb des Mikrospalts gelegen.

Wenn die Anordnung derart getroffen ist, dass die Zungenlasche beim Öffnungsvorgang zusammen mit dem sie unterseitig bedeckenden, durch die Schwächungslinie begrenzten Teilbereich der Kunststoffbeschichtung nach außen verschwenkt wird, dann ist die Schwächungslinie innerhalb des Mikrospalts gelegen. Details derartiger Standard-Dosendeckel sind in der deutschen Patentanmeldung DE 10 2015 122 548.4 beschrieben.

Das erfindungsgemäße Verfahren kann im Zusammenhang mit wiederverschließbaren Dosendeckeln der beschriebenen Art so gestaltet werden, dass das ausgestanzte Deckelteil im Verlauf des Rückhubs durch Federkraft gleich wieder unmittelbar in die Blechlage gedrückt und dort kraftschlüssig gehalten wird, aber es ist auch möglich, die Blechlage einerseits und den ausgestanzten Teilbereich andererseits getrennt weiteren Fertigungsstufen zuzuführen, in denen sie mit den zur Realisierung der wiederverschließbaren Öffnung benötigten Kunststoffelementen verbunden werden, und anschließend die beiden Komponenten zusammenzufügen und miteinander in der vorstehend bereits beschriebenen Weise dauerhaft zu verbinden, wobei dann der funktionsfähige wiederverschließbare Dosendeckel erhalten wird.

### Bezugszeichenliste

- 1: Dosendeckel
- 2: feste Deckelfläche
- 3: Bördelrand
- 4: Verbundwerkstoff
- 5: Blechlage (Aluminium, Weißblech)
- 6: Kunststofffolie, Formteil
- 7: Haftlackschicht
- 8: Mikrospalt
- 9: Einkerbung
- 10: Deckelbereich, aufschwenkbar
- 11: Verschließeinheit
- 12: Rastrippe
- 13: Dichtrippe
- 14: Dichtungsrahmen
- 15: Aufnahmenut innen
- 16: Aufnahmenut außen
- 17: Aufreißorgan
- 18: Schwenklagerbereich
- 19: fester Teil des Schwenklagers, Befestigungsbereich
- 20: Mittelsteg
- 21: Kippfederabschnitt
- 22: Fixierelement
- 23: Schrägflächen-Dichtpaarung
- 24: Gegenrast
- 25: Spiel
- 26: Abdichtschürze

## Patentansprüche

1. Verfahren zur Herstellung einer dichten, aufreißbaren oder eindrückbaren und vorzugsweise wiederverschließbaren Öffnung in einem flächigen Blechmaterial (5)
**dadurch gekennzeichnet,**
**dass** das Blechmaterial zumindest einseitig mit einer Haftlackschicht (7) beschichtet wird,
**dass** aus dem beschichteten Blechmaterial ein der Öffnung entsprechender Deckelbereich (10) in der Weise ausgestanzt wird,
**dass** der an der beschichteten Seite angreifende Stanzstempel mit einer einen Glattschnittbereich und einen sich daran anschließenden Schrägschnittbereich des ausgestanzten Teils bewirkenden Matrize zusammenwirkt,
**dass** das für den Stanzvorgang benötigte Schmiermittel ausschließlich und allein von der Haftlackschicht geliefert wird,
**dass** der ausgestanzte Deckelbereich, dessen Umfangskontur im Wesentlichen komplementär zur Matrizenform ist, wieder in die Öffnung im Blechmaterial eingesetzt und darin form- und/oder kraftschlüssig gehalten wird, und
**dass** der zwischen Blechmaterial und ausgestanztem Deckelbereich gebildete Mikrospalt (8) einseitig durch eine flächig auf das Blechmaterial aufkaschierte oder auflaminierte Folie (6) abgedeckt wird, die dem Mikrospalt benachbart mit einer umlaufenden Schwächung bzw. Einkerbung versehen ist.

2. Verfahren nach Anspruch 1,
**dadurch gekennzeichnet,**
**dass** das Blechmaterial (5) beidseitig und insbesondere vollflächig mit einer lebensmitteltauglichen Haftlackschicht (7) versehen wird.

3. Verfahren nach Anspruch 1 oder 2,
**dadurch gekennzeichnet,**
**dass** als Folie (6) eine vorgeformte, der Blechlagenform angepasste Folie verwendet und dieses Folien-Formteil mittels der Haftlackschicht (7) mit der Blechlage (5) verbunden wird.

4. Verfahren nach Anspruch 1,
**dadurch gekennzeichnet,**
**dass** der ausgestanzte Deckelbereich (10) beim Rückhub des Stanzstößels mittels Federkraft form- und/oder kraftschlüssig in der Öffnung fixiert wird.

5. Verfahren nach Anspruch 1,
**dadurch gekennzeichnet,**
**dass** sich der Glattschnittbereich am ausgestanzten Deckelbereich (10) über weniger als 50% der Materialstärke erstreckt und der Schrägschnittbereich sich vorzugsweise konisch erweitert.

## Claims

1. A method of manufacturing a sealed opening, which can be torn open or pressed in and can preferably be reclosed, in an areal sheet metal material (5),
**characterized in that**
the sheet metal material is coated at least at one side by an adhesive lacquer layer (7);
**in that** a lid region (10) corresponding to the opening is punched out from the coated sheet metal material in such a manner
that the punching die engaging at the coated side cooperates with a die which brings about a smooth cut region and an adjoining slanted cut region of the punched out part;
**in that** the lubricant required for the punching process is solely and only provided by the adhesive lacquer layer;
**in that** the punched out lid region whose peripheral contour is substantially complementary to the die shape is again inserted into the opening in the sheet metal material and is held therein in a shape matched and/or force transmitting manner; and
**in that** the microgap (8) formed between the sheet metal material and the punched out lid region is covered at the one side by a film (6) which is areally coated onto or laminated onto the sheet metal material and which is provided with a peripheral weakening or notch adjacent to the microgap.

2. A method in accordance with claim 1,
**characterized in that**
the sheet metal material (5) is provided with an adhesive lacquer layer (7) suitable for use with food at both sides and in particular over the full area.

3. A method in accordance with claim 1 or claim 2,
**characterized in that**
a preshaped film adapted to the sheet metal layer shape is used as the film (6) and this molded film part is joined to the sheet metal layer (5) by means of the adhesive lacquer layer (7).

4. A method in accordance with claim 1,
**characterized in that**
the punched out lid region (10) is fixed in the opening in a shape matched and/or force transmitting manner by means of a spring force on a return stroke of the punch plunger.

5. A method in accordance with claim 1,
**characterized in that**
the smooth cut region at the punched out lid region (10) extends over less than 50% of the material thickness and the slanted cut region preferably expands conically.

## Revendications

1. Procédé de réalisation d'une ouverture étanche, déchirable ou enfonçable et de préférence refermable dans un matériau en tôle plat (5),
**caractérisé en ce que**
le matériau en tôle est revêtu sur au moins une face d'une couche de vernis adhésif (7),
**en ce qu'**une zone de couvercle (10) correspondant à l'ouverture est découpée dans le matériau en tôle revêtu de telle sorte que le poinçon de découpage agissant sur la face revêtue coopère avec une matrice qui provoque une zone de coupe lisse et, à la suite de celle-ci, une zone de coupe oblique de la partie découpée,
le lubrifiant nécessaire à l'opération de découpage est fourni exclusivement et uniquement par la couche de vernis adhésif,
la zone de couvercle découpée, dont le contour périphérique est essentiellement complémentaire à la forme de la matrice, est replacée dans l'ouverture dans le matériau en tôle et y est maintenue par coopération de forme et/ou de force, et
la micro-fente (8) formée entre le matériau en tôle et la zone de couvercle découpée est recouverte d'un côté par une feuille (6) contrecollée ou laminée à plat sur le matériau en tôle, qui est pourvue d'un affaiblissement ou d'une encoche périphérique au voisinage de la micro-fente.

2. Procédé selon la revendication 1,
**caractérisé en ce que**
le matériau en tôle (5) est pourvu, sur les deux faces et en particulier sur toute sa surface, d'une couche de vernis adhésif (7) de qualité alimentaire.

3. Procédé selon la revendication 1 ou 2,
**caractérisé en ce que**
comme feuille (6) est utilisée une feuille préformée adaptée à la forme de la couche de tôle, et cette pièce formée en feuille est reliée à la couche de tôle (5) au moyen de la couche de vernis adhésif (7).

4. Procédé selon la revendication 1,
**caractérisé en ce que**
la zone de couvercle (10) découpée est fixée dans l'ouverture par coopération de forme et/ou de force au moyen de la force de ressort lors de la course de retour du poinçon de découpage.

5. Procédé selon la revendication 1,
**caractérisé en ce que**
la zone de coupe lisse sur la zone de couvercle découpée (10) s'étend sur moins de 50% de l'épaisseur du matériau, et la zone de coupe oblique s'élargit de préférence de manière conique.
